# EUROPEAN PATENT SPECIFICATION

(11) **EP 1 186 118 B1**
(45) Date of publication and mention of the grant of the patent: **02.08.2006**
(21) Application number: 00987832.3
(22) Date of filing: 30.12.2000
(51) Int. Cl.: H04B 7/005, H04L 12/56, H04L 1/00

(54) **METHOD AND APPARATUS FOR TRANSMITTING AND RECEIVING WIRELESS PACKET**
VERFAHREN UND VORRICHTUNG ZUR SENDUNG UND EMPFANG VON DRAHTLOSEN PACKETEN
PROCEDE ET APPAREIL DE TRANSMISSION ET DE RECEPTION SANS FIL DE PAQUETS

(30) Priority: 29.03.2000 US 192937 P; 06.05.2000 KR 2000024209
(43) Date of publication of application: 13.03.2002
(73) Proprietor: SAMSUNG ELECTRONICS CO., LTD., Suwon City, Kyungki-do 442-373 (KR); The Regents of the University of California, Oakland, California 94607-5200 (US)
(72) Inventor: PARK, Dong-Seek, c/o Samsung Electronics CO., Ltd., Suwon-city, Kyungki-do 442-373 (KR); PARK, Jeong-Hoon, c/o Samsung Electronics CO., Ltd, Suwon-city, Kyungki-do 442-373 (KR); LEE, Yung-Lyul, Songpa-gu, Seoul 138-160 (KR); VILLASENOR, John, c/o UCLA Engineering, Los Angeles, CA 90095 (US); LI, Adam, H., c/o UCLA Engineering, Los Angeles, CA 90095 (US)
(74) Representative: Geary, Stuart Lloyd
(86) International application number: PCT/KR2000/001572
(87) International publication number: WO 2001/073973

(56) References cited:
- EP-A- 0 782 291
- EP-A- 0 909 040
- EP-A- 0 942 569
- WO-A1-00/04677
- WO-A1-99/21296
- KR-A- 96 033 096
- US-A- 5 931 967
- US-A- 6 104 757
- BALACHANDRAN K ET AL: "GPRS-136: HIGH-RATE PACKET DATA SERVICE FOR NORTH AMERICAN TDMA DIGITAL CELLULAR SYSTEMS" IEEE PERSONAL COMMUNICATIONS, IEEE COMMUNICATIONS SOCIETY, US, vol. 6, no. 3, June 1999 (1999-06), pages 34-47, XP000831519 ISSN: 1070-9916

## Description

The present invention relates to a method of wirelessly transmitting a data packet comprising adding a header to multimedia data in a first protocol layer, adding an error detection code, which applies to said header and said multimedia data, in a second protocol layer below the first layer and transmitting the packet formed in the second protocol layer by radio and to method of wirelessly receiving a data packet, the method comprising receiving a wirelessly transmitted multimedia data packet and performing error detection on the received data packet in multiplex layer and transmitting associated the radio link protocol layer frame up the protocol stack if no errors are detected.

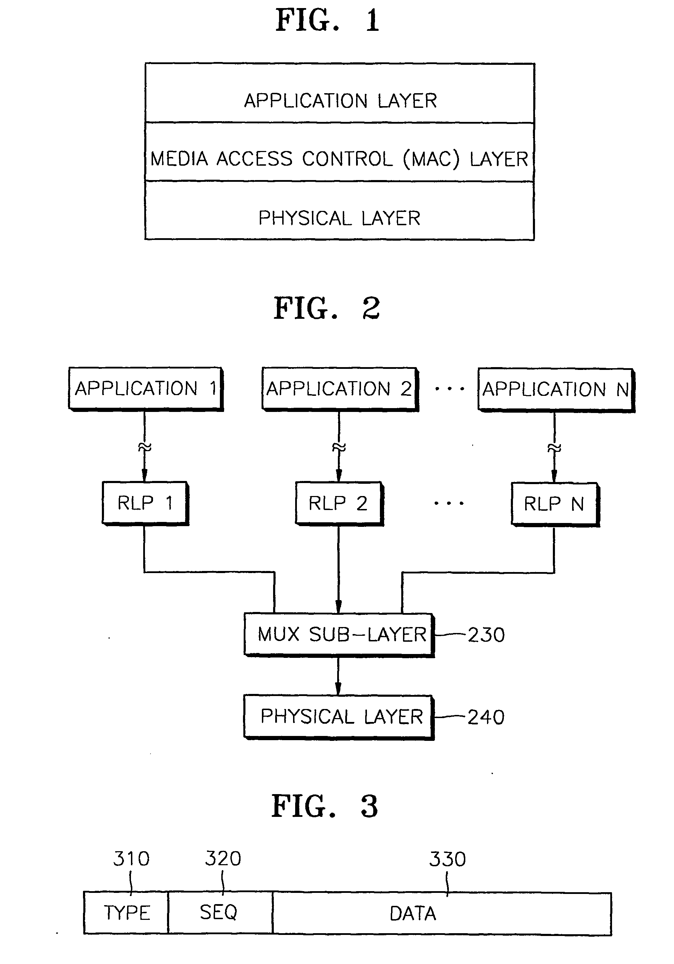

In general, a radio transmitter and a radio receiver employing a phase 1 standard in cdma 2000 are formed of high-level layers as shown in FIG. 1. Codec-related standards such as H. 324M. H. 323, and T. 120 correspond to an application layer. A physical layer performs channel coding, PN spreading, and modulation. A media access control (MAC) layer includes a signaling unit (not shown) and a radio link protocol (hereinafter referred to as RLP) (not shown), and the RLP converts payload on the application layer transmitted through a radio path into an inputformat on the physical layer. The physical layer among the three layers is mainly realized by hardware, and its flexibility is small when its hardware is determined by a standard. However, flexibility can be given to the application layer considering its network-independent portion.

Referring FIG. 2, one RLP corresponds to each of a number N of applications (application 1, application2,..., and application N). The RLP is connected to a physical layer 240 through a MUX sub-layer 230.

The MUX sub-layer 230 multiplexes a number N of received RLPs adaptively to a protocol data unit (PDU). Here, the multiplex protocol data unit (MUX-PDU) is available in a case where a channel bit error rate is less than10".

Referring to FIG. 3, a TYPE field 310 denotes a frame type, that is, re-transmitted frame or a new frame, and a SEQ field 320 denotes a frame number or a sequence number, and a DATA field 330 denotes a payload received from an application layer. Herc, a RLP type 3as shown in FIG. 3 is a mode, which even allows data to be re-transmitted, and the length of the DATA field 330 is variable in unit of byte. In this case, the length of the entire RLP frame is fixed. However, when even a part of header portions 310 and 320 of the RLP frame is damaged, it is impossible for a recipient to know the exact length of the DATA field 330, and then, RLP decoding is not possible.

EP 0,909,040 describes a method and apparatus in which supplementary information is added to data packets to enable the communication link causing errors in the data packets to be identified.

According to the present invention, there is provided a method of wirelessly transmitting a data packet according to claim 1 of the appended claims.

Preferably, the first layer is a radio link protocol layer and the second layer is a multiplexing layer.

Preferably, the making of said provision for a corruption indication flag comprises providing a space for a flag value of '1' or '0'.

According to the present invention, there is further provided a wireless data transmitter according to claim 4 of the appended claims.

According to the present invention, there is also provided a method of wirelessly receiving a data packet according to claim 5 of the appended claims.

The receiving method may include discarding the data packet in the event that an error is detected in said header using said header error protection code.

According to the present invention, there is still further provided a wireless data receiver for receiving data packets according to claim 7 of the appended claims.

A method of wireless data communication may comprise transmitting a packet by a transmission method according to the present invention and receiving the transmitted packet by a reception method according to the present invention.

A wireless data communication system may comprising a transmitter according to the present invention and a receiver according to the present invention.

An embodiment of the present invention will now be described, by way of example, with reference to the accompanying drawings, in which:
FIG. 1 is a block diagram of a conventional radio transmitter/receiver employing a phase 1 in cdma 2000;
FIG. 2 illustrates relations between RLP and a MUX sub-layer ;
FIG. 3 is a format diagram of a frame of MUX-PDU type 3 in CDMA version 2000;
FIG. 4 is a conceptual diagram of RLP framing according to the present invention;
FIG. 5 is a flow chart of RLP framing according to the present invention;
FIG. 6 is a format diagram of a new RLP frame according to FIG. 5; and
FIG. 7 is a flow chart for decoding the RLP frame of FIG. 6.

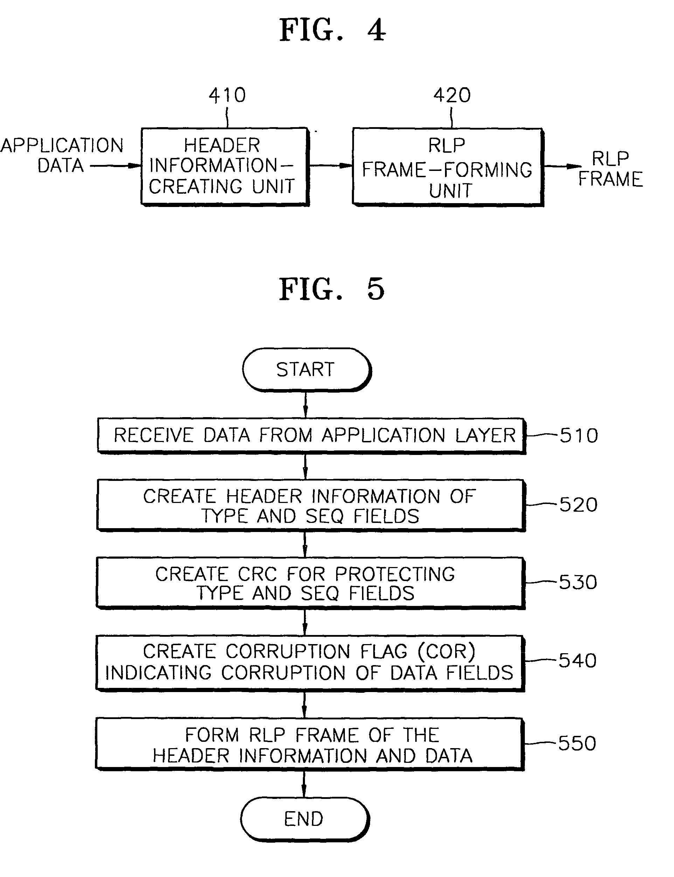

Referring to FIG. 4, a header information-creating unit 410 generates header information, which are matched to application data, that is, a frame type field, a sequence number field, an error detection code, and a corruption flag. Here, the corruption flag is indicated as two types of "0" or "1"indicating data corruption. A RLP frame-forming unit 420 forms a RLP frame by multiplexing header information and data, which are formed in the header information-creating unit 410.

Referring to FIG. 5, a RLP layer receives data from an application layer (step 510).

Next, the RLP layer creates a TYPE field indicating a RLP type and a sequence number field indicating a sequence number (step 520).

Next, the RLP layer creates a cyclic redundancy code (CRC) for detecting and correcting an error by checksumming bits of the TYPE and sequence number fields (step 530).

Next, a corruption flag field indicating corruption of the data field is added to the RLP layer (step 540).

Next, the RLP layer forms a RLP frame of data and header information including the TYPE field, the sequence number field, the CRC field, and the corruption flag field, which are created in the steps 510 to 540 (step 550).

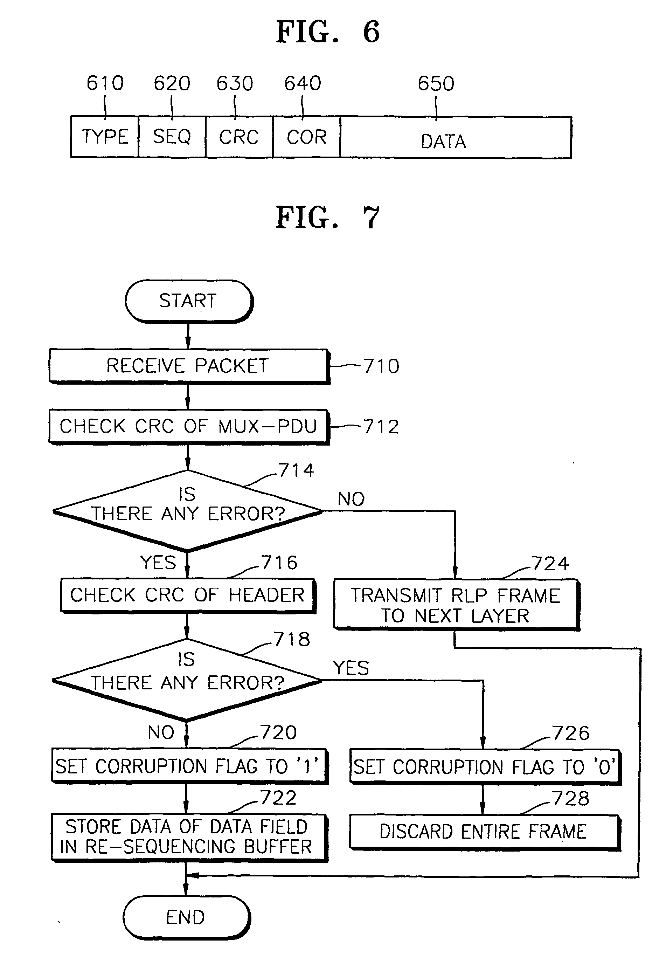

A RLP frame shown in FIG. 6 is formed of a header portion comprising a TYPE field 610, a sequence number (SEQ) field 620, a CRC field 630, and a corruption flag (COR) field 640, and a data field 650. The CRC field 630 and the COR filed 640 are added to the TYPE field 310 and the SEQ field 320, which are contained in the conventional header (see FIG. 3).

Here, the TYPE field 610 defines a frame type of a RLP. For example, when the TYPE field 610 is comprised of 2 bits, "10" is a new frame, and "11" is a re-transmitted frame. The SEQ field 620 denotes a sequence number and is comprised of 8 bits. The CRC field 630 is a 4-bit CRC for detecting and correcting an error of the TYPE field 610 and the SEQ field 620. Also, people skilled in the art can properly select a polynomial operator p(x) for the CRC of a specific field. For example, in case of 4-bit CRC, the polynomial operator p(x) = x⁴ + x² + x + 1 can be used. The COR field 640 is a flag indicating corruption of data and set by indication on a lower layer than a RLP layer. For example, when the COR field 640 is "0", there is no error in the data, and when the COR field 640 is "1", there is some error in the data.

In this way, a preferred embodiment when decoding the encoded RLP frame on the RLP layer of a recipient will be described with reference to FIG. 7.

First, a RLP frame is decoded by receiving a packet on the RLP layer (step 710).

Next, the RLP layer checks data by an error detection code (CRC) of the data field 650, which is formed in MUX-PDU on a MUX sub-layer (steps 712 and 714). Here, the RLP layer transmits the RLP frame to an application layer after setting the COR field 640 to "0" in a case where there is no error in the data field 650 (step 724).

However, in a case where some error is detected in the data field 650, the RLP layer checks an error of the TYPE field 610 and the SEQ field 620 by the error detection code (CRC), which is contained in the header (steps 716 and 718). Here, the RLP layer sets the COR field 640 to "1", which corresponds to data corruption (step 720) in a case where any error is not detected in the header, and in a case where any error is detected in the header, the RLP layer sets the COR field 640 to "0" (step 726). Here, when the COR field 640 is "1", the sequence number of the SEQ field 620 is increased by 1, and the data of the data field 650 are stored in a re-sequencing buffer (not shown) (step 722), and when the COR field 640 is "0", the sequence number SEQ is unknown, and then, the entire RLP frame is discarded (step 728).

In this way, the recipient error-protects header information such as the TYPE field 610 and the SEQ field 620 by the error detection code (CRC) 630 when decoding the encoded RLP frame, and it is known by the COR field 640 whether there is some error in the data or not.

Also, corruption of data is determined through the COR field 640 when decoding, and then, error resilience can be increased.

The above encoding and decoding methods can be embodied in a computer program. Codes and code segments encompassing the program can be easily inferred to by a skilled computer programmer in the art. Also, the program can be realized in media used in a computer and in a common digital computer for operating the program. The program can be stored in computer readable media. The media can include magnetic media such as a floppy disk or a hard disk and optical media such as a CD-ROM or a digital video disc (DVD). Also, the program can be transmitted by carrier waves such as the Internet.

While this invention has been particularly shown and described with reference to preferred embodiments thereof, it will be understood by those skilled in the art that various changes in form and details may be made therein without departing from the scope of the invention as defined by the appended claims.

As described above, error resilience can be increased by adding an error protection code and a corruption indication flag to header information on a radio link protocol (RLP) layer when multimedia data such as video data requiring real time or low delay is transmitted and received in a wireless environment, and a packet drop rate can be thereby reduced.

## Claims

1. A method of wirelessly transmitting a data packet comprising:
adding a header to multimedia data (650) in a first protocol layer so as to form a data packet;
adding a header error protection code (630) for protecting said header and provision for a corruption indication flag (640) for indicating corruption of said multimedia data to the data packet in said first protocol layer;
adding an error detection code to the data packet in a second protocol layer below the first layer, the error detecting code applying to said header and said multimedia data (650); and
transmitting the packet formed in the second protocol layer by radio.

2. A method according to claim 1, wherein the first layer is a radio link protocol layer and the second layer is a multiplexing layer (230).

3. A method according to claim 1 or 2, wherein the making of said provision for a corruption indication flag (640) comprises providing a space for a flag value of '1' or '0'.

4. A wireless data transmitter for transmitting data packets, comprising:
means (420) for adding a header to multimedia data (650) in a first protocol layer to form a data packet;
means for adding a header error protection code (630) for protecting said header and provision for a corruption indication flag (640) for indicating corruption of said data to the data packet in said first protocol layer,
means for adding an error detection code to the data packet in a second protocol layer below the first layer, the error detection code applying to said header and said multimedia data (650); and
means for transmitting the packet formed in the second protocol layer by radio.

5. A method of wirelessly receiving a data packet, the data packet having the characteristics of a data packet transmitted by a method according to claim 1, 2 or 3 and being received as a radio signal, the method comprising:
receiving the data packet;
performing error detection on the received data packet using said error detection code;
if an error is detected in said packet, performing error detection on said packet header using said header error protection code (630); and
if an error is not detected in said header, setting the corruption indication flag (640) to a corruption indicating state.

6. A method according to claim 5, including discarding the data packet in the event that an error is detected in said header using said header error protection code (630).

7. A wireless data receiver for receiving data packets, the data packet having the characteristics of a data packet transmitted by a method according to claim 1, 2 or 3 and being received as a radio signal, the receiver comprising:
means for receiving the data packet;
means for performing error detection on the received data packet using said error detection code;
means for performing error detection on said packet header using said header error protection code in the event that an error is detected in said packet; and
means for setting the corruption indication flag to a corruption indicating state in the event that an error is not detected in said header.

8. A method of wireless data communication comprising transmitting a packet by a method according to claim 1, 2 or 3 and receiving the transmitted packet by a method according to claim 5 or 6.

9. A wireless data communication system comprising a transmitter according to claim 4 and a receiver according to claim 7.

## Patentansprüche

1. Verfahren zum drahtlosen Senden eines Datenpakets, das aufweist:
Hinzufügen eines Headers zu Multimedia-Daten (650) in einer ersten Protokollschicht, um so ein Datenpaket zu bilden;
Hinzufügen eines Header-Fehler-Schutz-Codes (630) zum Schützen des Headers und Vorsehen eines Beschädigungs-Anzeige-Zeichens (640) zum Anzeigen einer Beschädigung der Multimedia-Daten zu dem Datenpaket in der ersten Pratokollschicht;
Hinzufügen eines Fehler-Erfassungs-Codes zu dem Datenpaket in einer zweiten Protokollschicht unterhalb der ersten Schicht, wobei der Fehler-Erfassungs-Code auf den Header und die Multimedia-Daten (650) angewandt wird; und
Senden des Pakets, das in der zweiten Protokollschicht gebildet ist, mittels Funk.

2. Verfahren nach Anspruch 1, wobei die erste Schicht eine Funkverbindungs-Protokollschicht ist und die zweite Schicht eine multiplexierende Schicht (230) ist.

3. Verfahren nach Anspruch 1 oder 2, wobei das Vorsehen eines Beschädigungs-Anzeige-Zeichens (640) ein Vorsehen eines Raums für einen Zeichen-Wert von "1" oder "0" aufweist.

4. Drahtloser Datensender zum Senden von Datenpaketen, der aufweist:
Einrichtungen (420) zum Hinzufügen eines Headers zu Multimedia-Daten (650) in einer ersten Protokollschicht, um ein Datenpaket zu bilden;
Einrichtungen zum Hinzufügen eines Header-Fehler-Schutz-Codes (630) zum Schützen des Headers und Vorsehen eines Beschädigungs-Anzeige-Zeichens (640) zum Anzeigen einer Beschädigung der Daten zu dem Datenpaket in der ersten Protokollschicht;
Einrichtungen zum Hinzufügen eines Fehler-Erfassungs-Codes zu dem Datenpaket in einer zweiten Protokollschicht, unterhalb der ersten Schicht, wobei der Fehler-Erfassungs-Code auf den Header und die Multimedia-Daten (650) angewandt wird; und
Einrichtungen zum Senden des Pakets, gebildet in der zweiten Protokollschicht, mittels Funk.

5. Verfahren eines drahtlosen Empfangs eines Datenpakets, wobei das Datenpaket die Charakteristika eines Datenpakets, gesendet durch ein Verfahren nach Anspruch 1, 2 oder 3, besitzt und als ein Funksignal empfangen wird, wobei das Verfahren aufweist:
Empfangen des Datenpakets;
Durchführen einer Fehlererfassung in Bezug auf das empfangene Daatenpaket unter Verwendung des Fehler-Erfassungs-Codes;
wenn ein Fehler in dem Paket erfasst ist, Durchführen einer Fehlererfassung in Bezug auf den Paket-Header unter Verwendung des Header-Fehier-Schutz-Codes (630); und
wenn ein Fehler nicht in dem Header erfasst ist, Einstellen des Beschädigungs-Anzeige-Zeichens (640) auf einen Zustand, der eine Beschädigung anzeigt.

6. Verfahren nach Anspruch 5, das ein Aussondern des Daten-Pakets in dem Fall, dass ein Fehler in dem Header erfasst ist, unter Verwendung des Header-Fehler-Schutz-Codes (630), umfasst.

7. Drahtloser Datenempfänger zum Empfangen von Datenpaketen, wobei das Datenpaket die Charakteristika eines Datenpakets, gesendet durch ein Verfahren nach Anspruch 1, 2 oder 3, besitzt und als ein Funksignal empfangen wird, wobei der Empfänger aufweist:
Einrichtungen zum Empfangen des Datenpakets;
Einrichtungen zum Durchführen einer Fehlererfassung in Bezug auf das empfangene Datenpaket unter Verwendung des Fehler-Erfassungs-Codes;
Einrichtungen zum Durchführen einer Fehlererfassung in Bezug auf den Paket-Header unter Verwendung des Header-Fehler-Schutz-Codes in dem Fall, dass ein Fehler in dem Paket erfasst ist; und
Einrichtungen zum Einstellen des Beschädigungs-Anzeige-Zeichens auf einen Zustand, der eine Beschädigung anzeigt, in dem Fall, dass kein Fehler in dem Header erfasst ist.

8. Verfahren einer drahtlosen Datenkommunikation, das ein Senden eines Pakets durch ein Verfahren nach Anspruch 1, 2 oder 3 aufweist und das gesendete Paket durch ein Verfahren nach Anspruch 5 oder 6 empfängt.

9. Drahtloses Datenkommunikationssystem, das einen Sender nach Anspruch 4 und einen Empfänger nach Anspruch 7 aufweist.

## Revendications

1. Procédé de transmission sans fil d'un paquet de données comprenant les étapes consistant à :
ajouter un en-tête à des données multimédia (650) dans une première couche de protocole de manière à former un paquet de données ;
ajouter un code de protection d'erreur d'en-tête (630) pour protéger ledit en-tête et procéder à l'apport d'un drapeau d'indication de corruption (640) pour indiquer la corruption desdites données multimédia au paquet de données dans ladite première couche de protocole ;
ajouter un code de détection d'erreur au paquet de données dans une seconde couche de protocole, située sous la première couche, le code de détection d'erreur s'appliquant audit en-tête et auxdites données multimédia (650) ; et
transmettre par radio le paquet formé dans la seconde couche de protocole.

2. Procédé selon la revendication 1, dans lequel la première couche est une couche de protocole de liaison radio et la seconde couche est une couche de multiplexage (230).

3. Procédé selon les revendications 1 ou 2, dans lequel la réalisation dudit apport d'un drapeau d'indication de corruption (640) comprend de fournir un espace pour une valeur de drapeau égale à « 1 » ou à « 0 ».

4. Emetteur de données sans fil pour transmettre des paquets de données comprenant :
un moyen (420) pour ajouter un en-tête à des données multimédia (650) dans une première couche de protocole pour former un paquet de données ;
un moyen pour ajouter un code de protection d'erreur d'en-tête (630) pour protéger ledit en-tête et procéder à l'apport d'un drapeau d'indication de corruption (640) pour indiquer une corruption desdites données au paquet de données dans une première couche de protocole ;
un moyen pour ajouter un code de détection d'erreur au paquet de données dans une seconde couche de protocole, située sous la première couche, le code de détection d'erreur s'appliquant au dit en-tête et auxdites données multimédia (650) ; et
un moyen pour transmettre par radio le paquet formé dans la seconde couche de protocole.

5. Procédé pour recevoir sans fil un paquet de données, le paquet de données ayant les caractéristiques d'un paquet de données transmis par un procédé selon les revendications 1, 2 ou 3, et étant reçu sous la forme d'un signal radio, le procédé comprenant les étapes consistant à :
recevoir le paquet de données ;
procéder à une détection d'erreur sur le paquet de données reçu à l'aide dudit code de détection d'erreur ;
si une erreur est détectée dans ledit paquet, procéder à une détection d'erreur sur ledit en-tête de paquet à l'aide dudit code de protection d'erreur d'en-tête (630) ; et
si une erreur n'est pas détectée dans ledit en-tête, définir le drapeau d'indication de corruption (640) dans un état d'indication de corruption.

6. Procédé selon la revendication 5, comprenant d'écarter le paquet de données dans le cas où une erreur serait détectée dans ledit en-tête à l'aide dudit code de protection d'erreur d'en-tête (630).

7. Récepteur de données sans fil pour recevoir des paquets de données, les paquets de données ayant les caractéristiques d'un paquet de données transmis par un procédé selon les revendications 1, 2 ou 3, et étant reçu sous la forme d'un signal radio, le récepteur comprenant :
un moyen pour recevoir les paquets de données ;
un moyen pour procéder à une détection d'erreur sur le paquet de données reçu à l'aide dudit code de détection d'erreur ;
un moyen pour procéder à une détection d'erreur sur ledit en-tête de paquet à l'aide dudit code de protection d'erreur d'en-tête dans le cas où une erreur serait détectée dans ledit paquet ; et
un moyen pour définir le drapeau d'indication de corruption dans un état d'indication de corruption dans le cas où une erreur ne serait pas détectée dans ledit en-tête.

8. Procédé de communication de données sans fil comprenant de transmettre un paquet à l'aide d'un procédé selon les revendications 1, 2 ou 3, et de recevoir le paquet transmis à l'aide d'un procédé selon les revendications 5 ou 6.

9. Système de communication de données sans fil comprenant un émetteur selon la revendication 4 et un récepteur selon la revendication 7.
